# FASCICULE DE BREVET EUROPEEN

(11) **EP 4 199 655 B1**
(45) Date de publication et mention de la délivrance du brevet: **22.07.2026**
(21) Numéro de dépôt: 22306875.0
(22) Date de dépôt: 14.12.2022
(51) Int. Cl.: H05B 47/125, H05B 47/19

(54) **DISPOSITIF D'ÉCLAIRAGE PUBLIC AUTOCONFIGURANT ET AUTONOME**
SELBSTKONFIGURIERENDE UND AUTONOME ÖFFENTLICHE BELEUCHTUNGSVORRICHTUNG
SELF-CONFIGURING AND SELF-CONTAINED PUBLIC LIGHTING DEVICE

(30) Priorité: 14.12.2021 FR 2113421
(43) Date de publication de la demande: 21.06.2023
(73) Titulaire: L'Eclairage Technique-Eclatec SAS, 54320 Maxéville (FR)
(72) Inventeur: LELIEVRE, David, 84100 Uchaux (FR)
(74) Mandataire: Novagraaf Technologies

(56) Documents cités:
- EP-A1- 2 986 086
- WO-A1-2014/181369
- US-A1- 2015 035 437

## Description

### DOMAINE DE L'INVENTION

La présente invention est relative au domaine de l'éclairage public. Elle concerne en particulier un système comportant un ou plusieurs dispositifs d'éclairage public adapté pour une mise en place sur la voirie, par exemple sous la forme de lampadaires.

### CONTEXTE DE L'INVENTION

Il est connu de longue date de disposer des dispositifs d'éclairage, ou luminaires, sur la voirie afin d'apporter un éclairage apportant sécurité et confort à ses usagers lorsque l'éclairage naturel est insuffisant, notamment de nuit.

Des luminaires sont proposés pour différents types de milieux : urbain, résidentiel, routier, etc., chacun pouvant avoir des spécificités. Il peut être prévu en effet des qualités d'éclairage différenciées en fonction du type d'environnement, en termes, notamment, d'intensité lumineuse, de surface d'éclairage, d'orientation de l'éclairage, etc.

De plus, pour un type de luminaire donné, il peut être intéressant de paramétrer certains luminaires d'une façon spécifique en fonction de leur emplacement sur la voirie.

Une autre contrainte réside dans la bonne gestion énergétique qui impose un équilibre entre la sécurité et le confort apporté par l'éclairage public et la dépense énergétique engendrée.

Récemment, la technologie LED (« Light Emitting Diode » en anglais) s'est imposée dans l'éclairage public du fait de son efficacité lumineuse mais aussi pour ses possibilités de pilotage permettant d'adapter l'éclairage dans le temps et dans l'espace. Cette technologie désormais mature équipe de nombreux luminaires récents et permet en outre une transition énergétique en convertissant les anciens luminaires principalement équipés de lampes à décharge.

Les luminaires récents peuvent comporter des capteurs afin de permettre d'adapter dynamiquement l'éclairage en fonction de certaines mesures sur leur environnement tels que la présence de mouvement, la densité de trafic ou un degré d'éclairage d'ambiance.

On peut par exemple citer les demandes de brevet IN201941039625 (« A System and method for automatic street lamp lighthing and energy saving control »), CN109152185 (« An intelligent control system for multi-source sensing street lamps »), CN110913542 (« Street lamp controller, street lamp control system and street lamp control method »).

La demande de brevet EP2986086A1 divulgue un dispositif de contrôle de l'éclairage routier configuré pour contrôler la distribution de la lumière d'un dispositif d'éclairage de la route de manière à améliorer la visibilité d'un piéton traversant de manière incorrecte. La demande de brevet WO2014/181369A1 divulgue une solution pour prédire l'évolution de paramètres relatifs à la luminosité, au trafic de piétons et de véhicules et aux conditions météorologiques, et contrôler de manière adaptative le flux lumineux d'un système d'éclairage public. Le document US2015/035437A1 divulgue un système d'éclairage intelligent, assisté par microprocesseur, configuré pour régler automatiquement l'intensité lumineuse et l'orientation de panneaux lumineux mobiles en fonction de conditions ambiantes variables comprenant notamment la détection de mouvements.

Par ailleurs, les luminaires récents de l'état de la technique sont hautement configurables et peuvent donner, selon les paramètres choisis, des résultats différents. Ces paramètres peuvent agir sur le flux lumineux, la distribution lumineuse, la colorimétrie, l'éblouissement, etc.

Il est dès lors possible de prévoir des luminaires généralistes et de les configurer différemment en fonction du lieu de leur implémentation. Un tel procédé passe par la collecte et l'analyse des données de la scène à éclairer (route, rue en milieu urbain, intersections..) caractérisée par le type de chaussée, le type et la densité d'usagers, les dimensions, les propriétés de réflexion lumineuse des surfaces éclairées, etc.

La collecte et l'analyse des exigences de la maîtrise d'ouvrage (règles d'éclairage retenues, prise en compte des normes d'éclairage, exigences spécifiques sur la couleur, les niveaux d'éclairement, les uniformités, etc.)

Un calcul des performances prévisionnelles alimenté par les performances de l'ensemble des configurations de luminaire qui va déterminer le meilleur jeu de paramètres permettant de fournir les résultats attendus.

En outre, les paramètres ainsi déterminés doivent être pris en charge par l'ensemble de la chaîne d'acteurs du projet, de sa conception jusqu'à l'installation de chaque luminaire sur la voirie. Par ailleurs, toute modification nécessite l'intervention d'un opérateur in situ afin de modifier les paramètres du luminaire concerné, même si des mécanismes de télégestion ont été déployés

### RESUME DE L'INVENTION

L'invention a pour but d'améliorer la situation.

À cette fin, selon un premier aspect, la présente invention peut être mise en œuvre par un système pour l'éclairage public comportant
- au moins un dispositif d'éclairage public adapté pour mise en place sur la voirie, comportant au moins un capteur vidéo fournissant un flux vidéo composé d'une série d'images numériques, lesdites images représentant un environnement dudit dispositif ; et au moins un élément d'éclairage configurable en intensité lumineuse et en zone d'éclairage en fonction de paramètres ;
- au moins un élément de traitement numérique comportant un premier modèle prédictif configuré pour déterminer des informations environnementales à partir de ladite série d'images numériques, et un second modèle prédictif pour déterminer des informations de présence au sein dudit environnement à partir de ladite série d'images numériques, et configuré pour émettre au moins une commande pour modifier lesdits paramètres dudit élément d'éclairage en fonction d'au moins lesdites informations environnementales et lesdites informations de présence.

Suivant des modes de réalisation préférés, l'invention comprend une ou plusieurs des caractéristiques suivantes qui peuvent être utilisées séparément ou en combinaison partielle entre elles ou en combinaison totale entre elles :
- ledit élément de traitement numérique est embarqué dans chacun desdits au moins un dispositif d'éclairage public ;
- ledit élément de traitement numérique est embarqué dans un dispositif d'éclairage public dit maître parmi lesdits au moins un dispositif d'éclairage public, les autres desdits au moins un dispositif d'éclairage public étant dits esclaves ; ledit dispositif d'éclairage public maître et lesdits dispositifs d'éclairage publics esclaves comportant des éléments de communication configurés pour la transmission desdites images numériques et de ladite au moins une commande ;
- ledit élément de traitement numérique est déployé sur une plateforme de traitement de l'information distante, et dans lequel ledit au moins un dispositif de traitement numérique et lesdits dispositifs d'éclairage publics comportent des éléments de communication configurés pour la transmission desdites images numériques et de ladite au moins une commande ;
- ledit second modèle prédictif est configuré pour déterminer lesdits informations de présence selon des contraintes temps-réel ;
ledit second modèle prédictif est un réseau de neurones multicouches de type « Yolo » ;
- ledit premier modèle prédictif est configuré pour déterminer au moins une région dans ledit environnement, lesdites informations environnementales comprenant une classe respective associée à ladite au moins une région ;
- ledit élément d'éclairage est configuré pour adopter des intensités lumineuses variables au sein de ladite zone d'éclairage et ladite commande est adaptée pour modifier des paramètres dudit élément d'éclairage afin que ladite intensité lumineuse soit adaptée en fonction de la classe respective associée à ladite au moins une région;
- ledit premier modèle prédictif est prévu pour détecter un élément particulier au sein dudit environnement, et dans lequel ladite commande est prévue pour modifier des paramètres dudit élément d'éclairage de sorte à provoquer une qualité d'éclairage particulier autour dudit élément particulier ;
- ledit élément de traitement numérique est configuré afin de déterminer un événement particulier et déclencher la transmission d'un message d'alerte à destination d'un serveur tiers via un réseau de télécommunication.

L'invention propose donc un système pour l'éclairage public qui est autoconfigurant.

Elle permet ainsi d'éviter l'effort humain de déterminer les paramètres en fonction de son lieu d'implantation. Celui-ci est en effet à même de percevoir son environnement et d'automatiquement déterminer les paramètres, sans intervention humaine, afin de fonctionner correctement.

Elle permet également de prendre en compte les éventuelles évolutions de cet environnement sans nécessiter pour autant une intervention humaine in situ.

D'autres caractéristiques et avantages de l'invention apparaîtront à la lecture de la description qui suit d'un mode de réalisation préféré de l'invention, donnée à titre d'exemple et en référence aux dessins annexés

### Brief Description of the Figures

### BREVE DESCRIPTION DES FIGURES

Les dessins annexés illustrent l'invention :
La figure 1a illustre un dispositif d'éclairage public selon un mode de réalisation de l'invention.
La figure 1b illustre un élément de traitement numérique selon un mode de réalisation de l'invention.
Les figures 2a, 2b, 2c illustrent trois modes de réalisation possibles pour un système comportant au moins un dispositif d'éclairage public et au moins un élément de traitement numérique.
La figure 3 illustre une image numérique segmentée selon un mode de réalisation de l'invention.

### DESCRIPTION DETAILLEE DE MODES DE REALISATION DE L'INVENTION

Un dispositif d'éclairage public est un dispositif prévu et adapté pour être disposé sur la voirie afin d'apporter un éclairage de celle-ci à des fins de sécurité ou de confort des usagers.

Un dispositif d'éclairage public peut être déployé en différents types de lieux, ou environnements. Il peut par exemple s'agir d'une route en zone rurale, d'une autoroute, d'un croisement de route, d'une rue en zone urbaine ou périurbaine, d'un parking, d'une piste cyclable, d'une voie piétonne, d'un tunnel, etc. Chacun de ces lieux, ou environnements, peut être impacté par diverses caractéristiques, comme un trafic moyen, un éclairage naturel, la proximité d'autres types d'éclairages artificiels, etc.

En fonction de l'environnement, différents types d'usagers peuvent être à considérer : automobiles, cyclistes, piétons, etc.

Un dispositif d'éclairage public peut prendre différentes formes matérielles, notamment en fonction de l'environnement.

Typiquement, un dispositif d'éclairage public peut prendre pour forme un lampadaire, constitué d'un pied vertical au sommet duquel est disposé un élément d'éclairage orienté vers le bas.

D'autres formes peuvent toutefois exister : appliques murales, caténaires...

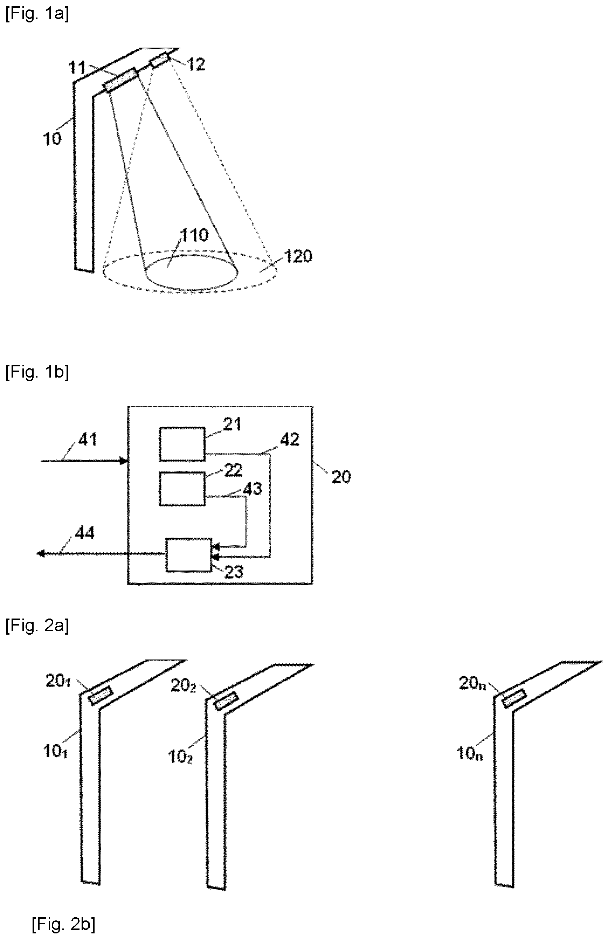

La figure 1a illustre un dispositif d'éclairage public 10, conforme à un mode de réalisation de l'invention et ayant la forme d'un lampadaire comportant un support vertical et une tête orientée substantiellement vers le bas.

Cette tête comporte au moins un élément d'éclairage 11 et au moins un capteur vidéo 12.

L'élément d'éclairage est configurable au moins en intensité et en zone d'éclairage. Il peut également être configurable selon d'autres caractéristiques, telles que la colorimétrie. L'élément d'éclairage est donc associé à un ensemble de paramètres qui sont modifiables et permettent sa configuration.

La zone d'éclairage 110 peut se caractériser notamment par une orientation et une surface de l'éclairage au sol. Selon un mode de réalisation, la zone d'éclairage peut comporter plusieurs sous-zones qui peuvent être jointes ou disjointes. Il est alors possible d'affecter une intensité lumineuse distinctes pour chaque sous-zone.

La nature des paramètres permettant de configurer effectivement l'élément d'éclairage pour obtenir de tels résultats dépend notamment de la technologie de cet élément (angles, angles solides, identifiants de LED dans une matrice, etc.)

Selon un mode de réalisation de l'invention, l'élément d'éclairage est basé sur une technologie basée sur des LEDs. Parmi différentes technologies de LED, on peut notamment citer :
- les « High power LED »,
- les « mid power LED »,
- les COB (« Chip On Board »),
- les OLED (« Organic LED »),
- les CSP (« Chip Scale Packaging »)...

Le capteur vidéo 12 peut être conforme à différentes technologies.

Plusieurs capteurs peuvent être prévus. Par exemple, des capteurs peuvent avoir des orientations et/ou dispositions différentes afin d'augmenter la surface capturée et d'ainsi permettre une meilleure compréhension de l'environnement du dispositif par le ou les élément(s) de traitement numérique. Également, des capteurs de types différents peuvent être prévus afin d'offrir une meilleure robustesse aux différentes conditions environnementales (par exemple nuit/jour, temps clair, pluie/brouillard, etc.). Ainsi, on peut notamment prévoir une caméra infra-rouge afin de mieux capturer l'environnement de nuit lorsque l'élément d'éclairage 11 est éteint ou bien en dehors de la zone d'éclairage de celui-ci.

D'une façon générale, le (ou les) capteur vidéo peut être adapté pour couvrir un environnement 120 qui englobe la zone d'éclairage 110.

Les capteurs vidéos fournissent un flux vidéo composé d'une série d'images numériques. Ces images numériques représentent l'environnement 120.

Le système pour éclairage public selon l'invention comporte également au moins un élément de traitement numérique dont un mode de réalisation est illustré par la figure 1b.

Un élément de traitement numérique 20 comporte au moins deux modèles prédictifs 21, 22.

Un premier modèle prédictif 21 est configuré pour déterminer des informations environnementales 42 à partir d'une série d'images numériques 41 fournie à l'élément de traitement numérique 20.

Un second modèle prédictif 22 est configuré pour déterminer des informations de présence 43 au sein de l'environnement 120 à partir de cette série d'images numériques 41.

En outre, l'élément de traitement numérique 20 est configuré pour émettre au moins une commande 44 à partir des informations environnementales 42 et des informations de présence 43. Ces commandes sont destinées à modifier au moins certains des paramètres de l'élément d'éclairage 10.

Des moyens 23 peuvent être prévus pour déterminer cette commande à partir des informations 42, 43 et l'émettre à destination de l'élément d'éclairage 11. Ces moyens peuvent être par exemple un module logiciel.

Ce module logiciel ainsi que les premier et second modèles prédictifs peuvent être classiquement mis en œuvre sur une plateforme de traitement de l'information comportant une combinaison de circuits électriques tels que des microprocesseurs, mémoires et autres circuits spécifiques, et de modules logiciels (microprogramme des processeurs, système d'exploitation, etc.)

Les informations environnementales 42 concernent un état statique de l'environnement 120 perçu par les capteurs vidéos 12.

Cet état statique regroupe des données caractéristiques de l'environnement qui sont faiblement variables dans le temps. En particulier, cet état statique est indépendant de la présence ou non d'un usager dans l'environnement à un instant donné. Autrement dit, ces informations environnementales 42 se distinguent des informations de présence 43 qui sont, elles, dynamiques, et dépendantes de la présence d'un usager à un instant donné.

Les informations environnementales peuvent comporter des données relatives aux usagers mais dans le but d'en déduire des statistiques : plusieurs images numériques sont prises en compte afin de déterminer des données statistiques sur le trafic et les types d'usagers fréquentant l'environnement 120 (piétons, véhicules...).

Les informations environnementales peuvent concerner le type de lieu au sein duquel le dispositif d'éclairage 10 est déployé, ainsi que différentes caractéristiques statiques de ce lieu.

Des exemples de type de lieux à détecter comprennent les parkings, les pistes cyclables, les abris-bus, les stations de recharge de véhicules électriques, les passages piétons, les ronds-points, etc.

Ces informations environnementales peuvent donc être déterminées à partir d'une image numérique ou de plusieurs images numériques (par exemple en faisant une moyenne sur des valeurs extraites de chaque image numérique).

Une fois déterminées, les informations environnementales peuvent être mémorisés et utilisées jusqu'à ce qu'elles soient mises à jour. La période de mise à jour peut être un paramètre configurable du système 10, 20.

Selon un mode de réalisation, on peut considérer que l'environnement est immuable et donc que les informations environnementales sont totalement statiques et n'ont donc pas nécessité à être mises à jour.

Selon un autre mode de réalisation, toutefois, on peut considérer que l'environnement est sujet à évolutions (travaux sur la voirie, évolution de la destination d'un quartier ou d'une voie, évolution des habitudes des usagers, ouverture ou fermeture de commerces dans le voisinage, etc.). Dans un tel cas, le caractère statique des informations environnementales doit être compris comme incluant des fluctuations sur le long terme (c'est-à-dire sur une échelle de temps très supérieure à celle pertinente pour les informations de présence), par exemple au-delà de la journée.

Les informations de présence 43 ont au contraire un caractère dynamique. Elles visent à représenter la présence ou non d'usagers dans l'environnement 120 capturé par les capteurs 12. Les informations de présence perdent rapidement leur pertinence puisque les usagers peuvent se déplacer. Elles doivent donc être régulièrement déterminées à nouveau et également être déterminés rapidement, avec une contrainte temps-réel, afin de refléter la réalité au moment de la disponibilité des informations de présence.

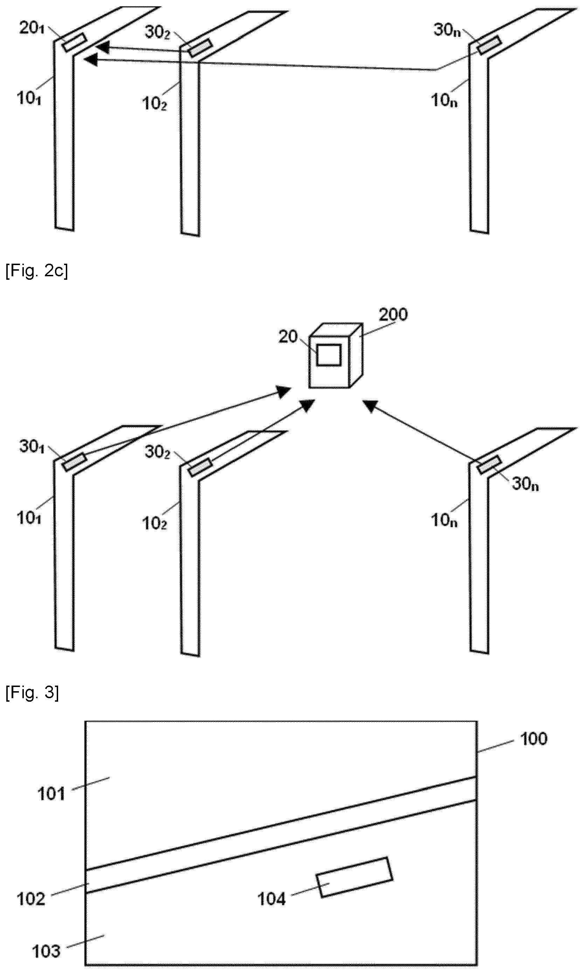

Les figures 2a, 2b et 2c illustrent trois mises en œuvre possibles pour un système pour l'éclairage public.

Selon une première mise en œuvre illustrée par la figure 2a, un élément de traitement numérique 201, 202, ... 20n est embarqué dans chacun des dispositifs d'éclairage public, respectivement 101, 102, ... 10n, où n est un nombre de dispositifs d'éclairage public.

Chaque dispositif d'éclairage public peut alors être autonome, au sens où les informations recueillies (environnementales 42, et de présence 43) peuvent être localement traitées par l'élément de traitement numérique embarqué afin de fournir une commande pour modifier les paramètres de l'élément d'éclairage de ce dispositif d'éclairage public.

Selon une deuxième mise en œuvre illustrée par la figure 2b, un élément de traitement numérique 201 est embarqué dans un dispositif d'éclairage public 101 dit maître. Les autres dispositifs d'éclairage publics 102, ... 10n sont dits esclaves.

Les dispositifs d'éclairage public comportent des éléments de communication configurés pour la transmission des images numériques et des commandes. Les dispositifs esclaves 102, ... 10n comportent donc des éléments de communication, respectivement 302, ... 30n. L'élément de communication du dispositif maître n'est pas représenté (selon un mode de réalisation, il peut s'agir d'un sous-élément de l'élément de traitement numérique 201).

Les flèches représentent la transmission des images numériques depuis les dispositifs esclaves vers le dispositif maître.

Ainsi, les calculs des dispositifs esclaves sont délégués vers un dispositif maître. Le système en lui-même demeure autonome, au sens où il n'a pas besoin d'intervention humaine, les différents dispositifs esclaves échangeant les informations dont ils ont besoin afin de parvenir à la finalité de la bonne configuration de l'éclairage de chacun des dispositifs d'éclairage public.

Bien évidemment, un système peut comporter plusieurs sous-systèmes, chacun comportant un dispositif maître et un ensemble de dispositifs esclaves. Dans un tel système, chacun dispositif esclave doit être configuré de sorte à être associé à un dispositif maître.

Selon une troisième mise en œuvre illustrée par la figure 2c, un élément de traitement numérique 20 est déployé sur une plateforme de traitement de l'information distante 200.

Ce dispositif de traitement numérique 20 et les dispositifs d'éclairage publics 101, 102, ... 10n comportent des éléments de communication 301, 302, ... 30n configurés pour la transmission desdites images numériques et de ladite au moins une commande. L'élément de communication plateforme de traitement de l'information distante 200 n'est pas représenté (selon un mode de réalisation, il peut s'agir d'un sous-élément de l'élément de traitement numérique 20).

Les flèches représentent la transmission des images numériques depuis les dispositifs d'éclairage public vers la plateforme de traitement de l'information distante 200.

Selon un mode de réalisation, cette plateforme de traitement de l'information distante peut être un serveur accessible aux dispositifs d'éclairage public par un réseau de télécommunication, qui peut être filaire ou sans fil. Ce serveur peut être par exemple hébergé et administré par le gestionnaire du parc de dispositifs d'éclairage.

Selon un autre mode de réalisation, la plateforme de traitement de l'information distante peut être un serveur accessible via un réseau à longue distance de type Internet. Il peut s'agir d'un ensemble de serveurs, par exemple organisé en ferme ou « cluster ». Il peut également s'agir d'une plateforme abstraite déployée sur une infrastructure partagée de type nuage, ou « cloud ».

Les modèles prédictifs 21, 22 peuvent être des modèles basés sur l'apprentissage machine (ou « machine learning » selon la terminologie en anglais).

Les premier et second modèles prédictifs sont distincts. Ils peuvent reposer sur une même technologie, mais posséder des états différents. Par exemple, dans un mode de réalisation selon lequel les modèles prédictifs sont des modèles basés sur l'apprentissage, des apprentissages sur des ensembles d'apprentissage distincts peuvent suffire à ce que les modèles résultants soient distincts.

Comme décrit précédemment, le second modèle prédictif 22 est prévu pour déterminer des informations de présence au sein de l'environnement 120 à partir de la série d'images numériques fournie par les capteurs vidéos 12.

Selon un mode de réalisation préférentiel, il est prévu pour déterminer ces informations de présence selon des contraintes temps-réel, c'est-à-dire de sorte à minimiser le temps entre une date de capture d'une image numérique et une date de mise à disposition des informations de présence. Comme évoqué précédemment, il est important en effet qu'au moment de la mise à disposition des informations de présence, celles-ci soient encore pertinentes.

Selon un mode de réalisation de l'invention, ce second modèle prédictif 22 est prévu pour déterminer, de façon binaire, si un usager est présent ou non dans une image numérique. Selon un autre mode de réalisation, il peut être prévu pour déterminer un nombre et/ou un type d'usager : par exemple, il peut déterminer si un usager présent est un piéton, un cycliste, un véhicule, etc. (et éventuellement, pour chaque type d'usager, déterminer leur nombre).

Selon un mode de réalisation, le second modèle prédictif est un réseau de neurones. Il peut notamment s'agir d'un réseau de neurones multicouches convolutif, par exemple de type « Yolo ».

Dans le cas d'un réseau de neurones, l'état du modèle prédictif peut être reflété par les valeurs des poids synaptiques. Le processus d'apprentissage vise à affecter des valeurs aux poids synaptiques de sorte que le modèle est en mesure de prédire une valeur de sortie satisfaisante à partir d'une nouvelle entrée. Dans le cas présent, une fois correctement entrainé, le second modèle prédictif sera à même de prédire les informations de présence à partir d'une image numérique soumise (qui n'appartenait pas à l'ensemble d'apprentissage).

Pour se faire, un grand nombre d'images numériques sont associés à des étiquettes qui indiquent des informations de présence correspondantes. Ces images numériques peuvent être générées dans un contexte similaire à celui de l'exploitation du dispositif d'éclairage public. Cela signifie notamment qu'elles sont générées à partir de capteurs identiques et similaires et selon un même point de vue : ainsi, les capteurs vidéos étant classiquement disposés en hauteur au sommet d'un pied de lampadaire et orientés vers le bas, l'ensemble d'apprentissage doit donc être constitué d'images numériques capturés dans ces mêmes conditions. Également, les images numériques utilisées pour l'apprentissage peuvent être générées par simulation numérique.

Cet ensemble d'apprentissage doit préférentiellement comporter une grande diversité d'images afin d'obtenir, en prédiction (ou inférence), une robustesse et une précision dans la détermination des informations de présence, quelque soient les conditions de prise de vue (conditions d'illumination), le type d'usagers, les vêtements et les caractéristiques physiques des piétons, cyclistes etc. (notamment le port de chapeaux, de parapluies, etc.) ...

Selon ce mode de réalisation, donc, par apprentissage, ce deuxième modèle prédictif est configuré pour déterminer des informations de présence à partir des images numériques qui lui sont soumises.

Le réseau de neurones Yolo a été décrit dans l'article « You Only Look Once: Unified Real-Time Object Detection » de Joseph Redmon, Santosh Divvala, Ross Girschick et Ali Garhadi, 2016.

Selon un mode de réalisation, la version Yolo v4 peut être utilisée. Celle-ci a été proposée dans l'article « YOLOv4: Optimal Speed and Accuracy of Object Detection » de Alexey Bochkovskiy, Chien-Yao Wang, Hong-Yuan Mark Liao, arXiv:2004.10934

Yolo est un réseau de neurones convolutif pour la détection d'objets, construit sur l'architecture « Darknet53 » qui est un classifieur d'images constitué de 106 couches dont 53 couches de convolution.

Une des caractéristiques de Yolo est de proposer une prédiction d'une région d'intérêt (correspondant à un usager détecté) avec plusieurs résolutions différentes : après un ensemble de couches de sous-échantillonnage, la couche suivante fournit une première détection à la résolution la plus basse. Les couches suivantes sont des couches de suréchantillonnage, et typiquement 2 couches parmi celles-ci permettent des nouvelles détections à des résolutions croissantes.

Dans la version 4 de Yolo, deux nouveaux concepts sont introduits : « Bag of freebies » (BOF) et « Bag of Specials (BoS).

Le BoF (que l'on pourrait traduire par « sac de gratuités) impacte la stratégie d'apprentissage du réseau de neurones Yolo. Il peut par exemple s'agir de méthodes d'augmentation de données, qui permet d'accroitre automatiquement la diversité des données d'entrée afin d'améliorer la robustesse du modèle prédictif résultant.

Le « sac de spécialités » (BoS) concerne des post-traitements et des méthodes qui peuvent accroître le coût d'inférence mais visent à améliorer la détection d'objet.

L'article susmentionné fournit des listes d'exemples de ces « sacs » (sections 2.2 et 2.3), ainsi que les choix effectués pour l'architecture de YOLOv4 (section 3.4).

Un des intérêts de ce modèle YOLO est de permettre des détections en temps-réel : on peut donc soumettre les images numériques du flux généré par les capteurs vidéos, de sorte que soit automatiquement détecté la présence d'un usager

Le premier modèle vise à déterminer des informations environnementales. Comme évoqué précédemment, ces informations environnementales évoluent de façon beaucoup moins rapide, de sorte qu'une contrainte temps-réel ne pèse pas sur ce premier modèle prédictif. Il est donc possible de privilégier la qualité de la détection.

On peut ici utiliser un réseau de neurones de type HARD-Net (Hardness AwaRe Discrimination Network. Ce type de réseau est notamment décrit dans l'article fondateur de Tianjiao Li, Jun Liu, Wei Zhang, and Lingyu Duan, « HARD-Net (Hardness AwaRe Discrimination Network for 3D Early Activity Prediction » in Conference: European Conference on Computer Vision, novembre 2020 (DO1:10.1007/978-3-030-58621-8_25)

Selon un mode de réalisation, ce premier modèle prédictif est configuré pour déterminer au moins une région dans l'environnement perçu. Les informations environnementales comprennent alors une classe associée à chacune de ces régions.

Cette étape de détermination des régions dans l'environnement perçu peut être une segmentation d'image.

La figure 3 illustre une image numérique 100 segmentée.

Dans cet exemple, une première classe 101 représente une route ou une rue, la classe 102 représente un trottoir, la classe 103 représente une zone végétalisée.

Selon un mode de réalisation, ces informations environnementales peuvent permettre des déterminer l'éclairage à effectuer.

En particulier, l'élément d'éclairage peut être configuré pour adopter des intensités lumineuses variables au sein de la zone d'éclairage 110. La commande générée par l'élément de traitement numérique 20 peut être adaptée pour modifier des paramètres de l'élément d'éclairage 11 afin que cette intensité lumineuse soit adaptée en fonction de la classe respective associée aux régions détectées.

En effet, en fonction de cette segmentation, il est possible d'avoir une compréhension suffisante de l'environnement du dispositif et donc d'en déduire un éclairage à atteindre.

Ainsi, dans cet exemple, la région de classe 101 correspond à une zone dont les usagers sont habituellement des véhicules. Ceux-ci disposant de leurs propres systèmes d'éclairage, le dispositif peut n'avoir qu'à apporter un éclairage modéré. Par contre, la région 102 correspondant à une zone où les usagers habituels sont des piétons, l'éclairage peut devoir être plus soutenu. Enfin la région 103 est a priori une zone où il n'y a pas d'usagers et donc un éclairage plus faible peut être apporté, voir aucun éclairage.

En fonction de son entrainement, le modèle prédictif 21 peut détecter différentes classes de région au sein des images numériques qui lui sont soumises lors du déploiement. À titre d'exemples, on peut citer:
- Les voies pour véhicules (rues, routes...)
- Les voies piétonnes,
- Les voies ou pistes cyclables
- Les parkings
- Les parcs et zones similaires, etc.

Selon un mode de réalisation, cette détermination d'un éclairage distinct par région peut être automatiquement réalisée par le modèle prédictif 21, en effectuant un entrainement avec un ensemble d'apprentissage dans lequel des étiquettes indiquant des éclairages à atteindre sont associés à des images numériques.

Selon un mode de réalisation de l'invention, les informations environnementales déterminent un éclairage maximum à atteindre (pour l'ensemble de la zone d'éclairage 110 ou pour des régions de cette zone, en fonction des modes de réalisation).

Les informations de présence 22 peuvent être utilisées pour moduler cet éclairage en fonction de la présence.

Selon un mode de réalisation, les informations de présence peuvent également être corrélées avec les régions détectées. Autrement dit, le modèle prédictif 21 détermine la localisation des usagers afin des mettre en correspondance avec les régions obtenues par les informations environnementales.

Les différentes régions sont susceptibles de recevoir un niveau d'éclairement et d'uniformité différents. Ces niveaux peuvent par exemple être déterminés en France par la norme NF EN 13201, qui indique les exigences en fonction de la classe de chaussée publique.

L'information de présence peut permettre d'activer le niveau requis pour la région concernée, tandis qu'en l'absence d'usager, le niveau d'éclairement peut être nul ou résiduel.

Par exemple, l'apparition d'un véhicule dans la région « route » 101 va provoquer un éclairage modéré associé à cette région. L'apparition d'un piéton dans la région « trottoir » 102 va provoquer l'éclairage fort associé à cette région.

Il est à noter que l'invention permet de disposer à la fois d'informations environnementales et d'informations de présence et qu'à partir de ces deux types d'informations, il est possible de déterminer différentes fonctionnalités et configurations d'éclairage possibles.

Par exemple, selon un mode de réalisation, l'élément de traitement numérique peut émettre une commande prévue pour modifier un paramètre colorimétrique de l'élément d'éclairage. Il est ainsi possible de fournir des couleurs d'éclairage distincts en fonction de la classe des régions, ou, plus généralement, des informations environnementales.

Par exemple, on peut générer un éclairage en blanc froid pour une région dédiée aux véhicules et un éclairage dans un blanc plus chaud pour une région dédiée aux piétons.

Selon un mode de réalisation de l'invention, ce premier modèle prédictif 21 est prévu pour détecter un élément particulier au sein de son environnement 120. On peut alors générer une commande prévue pour modifier des paramètres de l'élément d'éclairage de sorte à provoquer une qualité d'éclairage particulier autour de cet élément particulier.

L'élément particulier peut par exemple est un élément de mobilier urbain : abribus, banc public, etc. Un exemple particulièrement intéressant est une borne de recharge pour véhicule électrique.

La qualité d'éclairage particulier peut consister en une intensité lumineuse (qui peut être indépendante des informations de présence), en une colorimétrie, etc.

Selon un mode de réalisation, l'éclairage public peut ainsi éclairer de façon spécifique certains éléments de la voirie, de façon automatique.

Par exemple, certains éléments pourront être éclairés même en l'absence d'usagers, afin que, de nuit, ils puissent être repérables de loin (par exemple un abribus). De même une colorimétrie spécifique pourra permettre une meilleure lisibilité de ces éléments pour un usager lointain (abribus, zone de taxis, etc.)

Sur la figure 3, la région 105 peut correspondre à un banc public situé au sein de la région végétalisée 103.

Par ailleurs, selon un mode de réalisation de l'invention, les informations environnementales comprennent des caractéristiques liées aux propriétés de réflexion de l'environnement détecté.

En particulier, des caractéristiques différentes peuvent être déterminées par régions de l'environnement. En particulier également, ces caractéristiques peuvent représenter la luminance du sol des régions (ou de la région).

La luminance de la chaussée dépend de ses propriétés de réflexion. Celles-ci sont définies, et prises en compte dans les calculs de manière standardisée, par des matrices établies dans les années 1960. Elles ne sont plus adaptées aux revêtements actuels et donc l'erreur de calcul est importante entre ce modèle et la réalité.

Selon un mode de réalisation de l'invention, on peut analyser l'image de la chaussée prise par la caméra pour déterminer le niveau de luminance réel.

La performance du système d'éclairage sera donc adaptée à la réalité de la chaussée et même à son évolution dans le temps. Les travaux sur les mesures des revêtements de chaussée, notamment faits en France par le CEREMA, montrent que la clarté des revêtements a augmentée. Cela conduira donc à une baisse des niveaux de puissances pour atteindre le résultat attendu (et donc à une économie d'énergie).

Les paramètres de l'élément d'éclairage qui peuvent être modifiés par la commande émise par l'élément de traitement numérique peuvent être de différentes natures et dépendre fortement de la technologie et des possibilités de l'élément d'éclairage.

À titre d'exemples possibles, pouvant être considérés seuls ou en combinaisons :
- l'élément d'éclairage peut intégrer plusieurs sous-systèmes optiques différents pilotés chacun par une intensité. Un logiciel d'optimisation ajustera la combinaison linéaire des intensités des différents systèmes. Les paramètres modifiés peuvent être ainsi ces intensités dont les valeurs permettent de moduler les éclairages particuliers de chaque sous-système et donc de chaque zone associée à ces sous-systèmes.
- l'élément d'éclairage comporte une source LED mobile. Un paramètre modifiable peut être son déplacement par rapport à une optique fixe, permettant ainsi de modifier la distribution lumineuse.
- l'élément d'éclairage peut comporter une matrice de petits systèmes optiques, chacun de ces systèmes étant capable d'éclairer une zone de l'espace. Selon la zone à éclairer, chacun de ces mini-système est activé, ou pas, ou partiellement.
- l'élément d'éclairage peut comporter des éléments souples. Les paramètres peuvent alors concerner la déformation à leur imposer par action mécanique (pression, extension...) afin de modifier la distribution de l'intensité lumineuse.
- les paramètres peuvent porter sur des propriétés optiques du système optique de l'élément d'éclairage, par commande électrique,
- etc.

Selon un mode de réalisation, l'élément de traitement numérique 20 est configuré afin de déterminer un événement particulier au sein des images numériques.

Un tel événement peut être une modification des régions issues de la segmentation des images numériques, par exemple, ou bien un changement de la texture d'une région etc. On peut ainsi notamment détecter une dégradation de la route (changement de texture, empiètement d'une zone herbeuse sur la chaussée, etc.)

En cas de détection d'un tel événement, un message d'alerte peut être transmis à destination d'un serveur tiers vers un réseau de télécommunication. De cette façon, les services de la voirie, ou tout autre organisme peuvent être informés et agir au plus tôt.

Le dispositif de l'invention peut ainsi permettre de résoudre des problématiques supplémentaires de façon automatique, sans intervention humaines, liées à l'environnement 120 perçu.
Le système selon l'invention peut ainsi être vu comme une plateforme offrant des services de base sur laquelle de nouvelles fonctions applicatives peuvent être déployés. Ces nouvelles fonctions peuvent être déployées par simple téléchargement et/ou mise à jour des moyens logiciels mis en œuvre par l'élément de traitement numérique (que celui-ci soit embarqué au sein du dispositif d'éclairage public lui-même ou déporté).

## Revendications

1. Système pour l'éclairage public comportant
au moins un dispositif d'éclairage public (10) adapté pour mise en place sur la voirie, comportant au moins un capteur vidéo (12) fournissant un flux vidéo composé d'une série d'images numériques, lesdites images représentant un environnement (120) dudit dispositif ; et au moins un élément d'éclairage (11) configurable en intensité lumineuse et en zone d'éclairage (110) en fonction de paramètres ;
au moins un élément de traitement numérique (20) comportant un premier modèle prédictif (21) configuré pour déterminer des informations environnementales à partir de ladite série d'images numériques et un second modèle prédictif (22) pour déterminer des informations de présence au sein dudit environnement à partir de ladite série d'images numériques, lesdites informations de présence étant destinées à représenter la présence ou non d'au moins un usager dans l'environnement à un instant donné,
ledit au moins un premier modèle prédictif étant en outre configuré pour :
- déterminer au moins une région dans ledit environnement, lesdites informations environnementales comprenant une classe respective associée à ladite au moins une région, et,
- lorsqu'au moins un usager a été détecté dans l'environnement, déterminer une localisation dudit au moins un usager et la corréler avec ladite au moins une région détectée, et
ledit au moins un élément de traitement numérique (20) étant configuré pour émettre au moins une commande pour modifier lesdits paramètres dudit élément d'éclairage en fonction d'au moins lesdites informations environnementales et lesdites informations de présence,
ledit élément d'éclairage étant configuré pour adopter des intensités lumineuses variables au sein de ladite zone d'éclairage,
les informations environnementales étant utilisées pour déterminer un niveau d'éclairage requis pour ladite au moins une région détectée dans ladite zone d'éclairage en fonction de ladite classe associée à la dite au moins une région, et
les informations de présence étant utilisées pour moduler ledit niveau d'éclairage dans ladite au moins une région, ledit niveau d'éclairage requis étant activé lorsqu'au moins un usager a été détecté dans ladite au moins une région.

2. Système selon la revendication 1, dans lequel ledit élément de traitement numérique est embarqué dans chacun desdits au moins un dispositif d'éclairage public.

3. Système selon la revendication 1, dans lequel ledit élément de traitement numérique est embarqué dans un dispositif d'éclairage public dit maître parmi lesdits au moins un dispositif d'éclairage public, les autres desdits au moins un dispositif d'éclairage public étant dits esclaves ; ledit dispositif d'éclairage public maître et lesdits dispositifs d'éclairage publics esclaves comportant des éléments de communication configurés pour la transmission desdites images numériques et de ladite au moins une commande.

4. Système selon la revendication 1, dans lequel ledit élément de traitement numérique est déployé sur une plateforme de traitement de l'information distante, et dans lequel ledit au moins un élément de traitement numérique et lesdits dispositifs d'éclairage publics comportent des éléments de communication configurés pour la transmission desdites images numériques et de ladite au moins une commande.

5. Système selon l'une des revendications précédentes, dans lequel ledit second modèle prédictif est configuré pour déterminer lesdits informations de présence selon des contraintes temps-réel.

6. Système selon la revendication précédente, dans lequel ledit second modèle prédictif est un réseau de neurones multicouches de type « Yolo ».

7. Système selon la revendication 1, dans lequel ledit premier modèle prédictif est prévu pour détecter un élément particulier au sein dudit environnement, et dans lequel ladite commande est prévue pour modifier des paramètres dudit élément d'éclairage de sorte à provoquer une qualité d'éclairage particulier autour dudit élément particulier.

8. Système selon l'une des revendications précédentes, dans lequel ledit élément de traitement numérique est configuré afin de déterminer un événement particulier et déclencher la transmission d'un message d'alerte à destination d'un serveur tiers via un réseau de télécommunication.

## Patentansprüche

1. System für öffentliche Beleuchtung mit
mindestens einer öffentlichen Beleuchtungsvorrichtung (10), die zum Installieren auf der Straße geeignet ist, mit mindestens einem Videosensor (12), der einen Videostrom bereitstellt, der aus einer Reihe digitaler Bilder besteht, wobei diese Bilder eine Umgebung (120) der Vorrichtung darstellen; und mit mindestens einem Beleuchtungselement (11), dessen Lichtintensität und Beleuchtungszone (110) in Abhängigkeit von Parametern konfigurierbar sind;
mindestens einem digitalen Verarbeitungselement (20), das ein erstes Vorhersagemodell (21) aufweist, das konfiguriert ist, um aus der Reihe digitaler Bilder Umgebungsinformationen zu ermitteln, und ein zweites Vorhersagemodell (22), um aus der Reihe digitaler Bilder Anwesenheitsinformationen innerhalb der Umgebung zu ermitteln, wobei die Anwesenheitsinformationen dazu bestimmt sind, die Anwesenheit oder Abwesenheit mindestens eines Benutzers in der Umgebung zu einem bestimmten Zeitpunkt darzustellen,
wobei das mindestens eine erste Vorhersagemodell ferner konfiguriert ist zum:
- Ermitteln mindestens eines Bereichs in der Umgebung, wobei die Umgebungsinformationen eine jeweilige Klasse umfassen, die dem mindestens einen Bereich zugeordnet ist, und
- wenn mindestens ein Benutzer in der Umgebung erkannt wurde, Ermitteln des Standorts des mindestens einen Benutzers und Korrelieren diesen mit dem mindestens einen erkannten Bereich, und
wobei das mindestens eine digitale Verarbeitungselement (20) konfiguriert ist, um mindestens einen Befehl zum Ändern der Parameter des Beleuchtungselements in Abhängigkeit von mindestens den Umgebungsinformationen und den Anwesenheitsinformationen auszugeben,
wobei das Beleuchtungselement konfiguriert ist, um innerhalb der Beleuchtungszone variable Lichtintensitäten zu übernehmen,
wobei die Umgebungsinformationen verwendet werden, um eine erforderliche Beleuchtungsstärke für den mindestens einen erkannten Bereich in der Beleuchtungszone in Abhängigkeit von der dem mindestens einen Bereich zugeordneten Klasse zu ermitteln, und
wobei die Anwesenheitsinformationen verwendet werden, um die Beleuchtungsstärke in dem mindestens einen Bereich zu modulieren, wobei die erforderliche Beleuchtungsstärke aktiviert wird, wenn mindestens ein Benutzer in dem mindestens einen Bereich erkannt wurde.

2. System nach Anspruch 1, wobei das digitale Verarbeitungselement in jede der mindestens einen öffentlichen Beleuchtungsvorrichtung integriert ist.

3. System nach Anspruch 1, wobei das digitale Verarbeitungselement in einer sogenannten öffentlichen Master-Beleuchtungsvorrichtung unter der mindestens einen öffentlichen Beleuchtungsvorrichtung integriert ist, wobei die anderen der mindestens einen öffentlichen Beleuchtungsvorrichtung als Slaves bezeichnet werden; wobei die öffentliche Master-Beleuchtungsvorrichtung und die öffentliche Slave-Beleuchtungsvorrichtungen Kommunikationselemente aufweisen, die zum Übertragen der digitalen Bilder und des mindestens einen Befehls konfiguriert sind.

4. System nach Anspruch 1, wobei das digitale Verarbeitungselement auf einer entfernten Informationsverarbeitungsplattform bereitgestellt ist und wobei das mindestens eine digitale Verarbeitungselement und die öffentlichen Beleuchtungsvorrichtungen Kommunikationselemente aufweisen, die zum Übertragen der digitalen Bilder und des mindestens einen Befehls konfiguriert sind.

5. System nach einem der vorstehenden Ansprüche, wobei das zweite Vorhersagemodell konfiguriert ist, um die Anwesenheitsinformationen gemäß Echtzeitbeschränkungen zu ermitteln.

6. System nach dem vorstehenden Anspruch, wobei das zweite Vorhersagemodell ein mehrschichtiges neuronales Netzwerk vom Typ "Yolo" ist.

7. System nach Anspruch 1, wobei das erste Vorhersagemodell dazu vorgesehen ist, ein bestimmtes Element innerhalb der Umgebung zu erkennen, und wobei der Befehl dazu vorgesehen ist, Parameter des Beleuchtungselements zu ändern, um eine bestimmte Beleuchtungsqualität um das bestimmte Element herum zu bewirken.

8. System nach einem der vorstehenden Ansprüche, wobei das digitale Verarbeitungselement konfiguriert ist, um ein bestimmtes Ereignis zu ermitteln und das Übertragen einer Warnmeldung an einen Drittserver über ein Telekommunikationsnetz auszulösen.

## Claims

1. Street lighting system comprising
at least one street lighting device (10) suitable for installation on the roadway, comprising at least one video sensor (12) providing a video stream composed of a series of digital images, said images representing an environment (120) of said device; and at least one lighting element (11) configurable in luminous intensity and lighting zone (110) based on parameters;
at least one digital processing element (20) comprising a first predictive model (21) configured to determine environmental information from said series of digital images and a second predictive model (22) for determining presence information within said environment from said series of digital images, said presence information being intended to represent the presence or otherwise of at least one user in the environment at a given instant,
said at least one first predictive model being further configured to:
- determine at least one region in said environment, said environmental information comprising a respective class associated with said at least one region, and
- when at least one user has been detected in the environment, determine a location of said at least one user and correlate it with said at least one detected region, and
said at least one digital processing element (20) being configured to issue at least one command to modify said parameters of said lighting element based on at least said environmental information and said presence information,
said lighting element being configured to adopt variable light intensities within said lighting zone,
the environmental information being used to determine a lighting level required for said at least one region detected in said lighting zone based on said class associated with said at least one region, and
the presence information being used to modulate said lighting level in said at least one region, said required lighting level being activated when at least one user has been detected in said at least one region.

2. System according to claim 1, wherein said digital processing element is embedded in each of said at least one street lighting device.

3. System according to claim 1, wherein said digital processing element is embedded in one of said at least one street lighting device referred to as the master, the others of said at least one street lighting device being referred to as slaves; said master street lighting device and said slave street lighting devices comprising communication elements configured for transmission of said digital images and said at least one command.

4. System according to claim 1, wherein said digital processing element is deployed on a remote information processing platform, and wherein said at least one digital processing element and said street lighting devices comprise communication elements configured for the transmission of said digital images and said at least one command.

5. System according to any of the preceding claims, wherein said second predictive model is configured to determine said presence information according to real-time constraints.

6. System according to the preceding claim, wherein said second predictive model is a multilayer neural network of the "Yolo" type.

7. System according to claim 1, wherein said first predictive model is intended to detect a particular element within said environment, and wherein said command is intended to modify parameters of said lighting element so as to cause a particular quality of lighting around said particular element.

8. System according to any of the preceding claims, wherein said digital processing element is configured to determine a particular event and trigger the transmission of an alert message to a third-party server via a telecommunications network.
